(19) Europäisches Patentamt
European Patent Office
Office européen des brevets

(11) EP 3 284 623 A1

(12) EUROPEAN PATENT APPLICATION

(43) Date of publication:
21.02.2018 Bulletin 2018/08

(51) Int Cl.:
B60H 1/00 (2006.01)

(21) Application number: 17182398.2

(22) Date of filing: 20.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 27.07.2016 JP 2016147767

(71) Applicant: TOYOTA JIDOSHA KABUSHIKI
KAISHA
Toyota-shi, Aichi-ken, 471-8571 (JP)

(72) Inventors:
• INUI, Maya
Aichi-ken, 471-8571 (JP)
• ICHISHI, Yoshinori
Aichi-ken, 471-8571 (JP)

(74) Representative: J A Kemp
14 South Square
Gray's Inn
London WC1R 5JJ (GB)

(54) AIR CONDITIONING CONTROL SYSTEM

(57) An air conditioning control system which is provided in a vehicle includes an air conditioning device (10) and a controller (40). The controller is configured to acquire vehicle outside humidity information representing humidity when a start switch (5) of the vehicle is turned on, execute outside air introduction processing for making an outside air introduction ratio of the air conditioning device greater than 0% in an off state of the start switch (5), and when a first condition that the outside air introduction processing is executed is satisfied, calculate vehicle inside absolute humidity of the vehicle in an on state of the start switch (5) with absolute humidity based on the acquired vehicle outside humidity information as an initial value.

FIG. 1

AIR CONDITIONING DEVICE 10

CONTROLLER 40

START ON/OFF EVENT DETECTION UNIT 41

PARKING STATE DETECTION UNIT 42

VEHICLE OUTSIDE HUMIDITY INFORMATION ACQUISITION UNIT 44

INSIDE-OUTSIDE AIR TEMPERATURE DIFFERENCE DETERMINATION UNIT 45

OUTSIDE AIR INTRODUCTION PROCESSING UNIT 46

BLOWER OPERATION PROCESSING UNIT 47

HUMIDITY CALCULATION UNIT 48

FIRST HUMIDITY INITIAL VALUE CALCULATION UNIT 481

SECOND HUMIDITY INITIAL VALUE CALCULATION UNIT 482

HUMIDITY UPDATE UNIT 483

CONTROL UNIT 49

START SWITCH 5

Ba

EP 3 284 623 A1

**Description**

BACKGROUND OF THE INVENTION

1. Field of the Invention

The present disclosure relates to an air conditioning control system.

2. Description of Related Art

A technique which, in an on state of a start switch (for example, an ignition switch) of a vehicle, separately calculates both of an increase amount and a decrease amount of vehicle inside absolute humidity as absolute humidity (weight absolute humidity) in the vehicle interior in real time, calculates (updates) vehicle inside absolute humidity based on the increase amount and the decrease amount, and controls an air conditioning device based on the calculated vehicle inside absolute humidity is known (for example, see Japanese Patent Application Publication No. 2015-54688 (JP 2015-54688 A)). In the related art, there is a case where the vehicle inside absolute humidity (initial value) when the start switch is turned on is calculated on an assumption that relative humidity (hereinafter, referred to as "vehicle inside relative humidity") in the vehicle interior is 100%, or a case where a variable value varying based on weather information or the like at a vehicle position is used as another value. According to the related art, even in a case where a humidity sensor which detects the vehicle inside relative humidity is not used, the vehicle inside relative humidity is calculated based on the vehicle inside absolute humidity calculated as described above and an inside air temperature, whereby it is possible to perform air conditioning control, such as determination of an inlet mode (inside air circulation mode or outside air introduction mode) according to the vehicle inside relative humidity.

SUMMARY OF THE INVENTION

However, in the related art described above, outside air introduction into the vehicle interior in the off state of the start switch of the vehicle is not taken into consideration, making it difficult to increase the calculation accuracy of the vehicle inside absolute humidity. For example, in a case where an outside air introduction ratio of the air conditioning device is greater than 0% in the off state of the start switch, an inside-outside air humidity difference in the off state of the start switch is apt to become small. In a case where the inside-outside air humidity difference is comparatively small, the calculation accuracy of the vehicle inside absolute humidity can be increased using information representing humidity of outside air.

The invention provides an air conditioning control system which increases a possibility of obtaining vehicle inside absolute humidity with high calculation accuracy using information representing humidity of outside air.

An air conditioning control system according to a first aspect of the invention is an air conditioning control system which is mounted in a vehicle, and includes an air conditioning device and a controller. The controller is configured to acquire vehicle outside humidity information representing humidity when a start switch of the vehicle is turned on, execute outside air introduction processing for making an outside air introduction ratio of the air conditioning device greater than 0% in an off state of the start switch, and in a case where a first condition that the outside air introduction processing is executed is satisfied, calculate vehicle inside absolute humidity of the vehicle in an on state of the start switch with absolute humidity based on the acquired vehicle outside humidity information as an initial value. The vehicle outside humidity information is information representing humidity of outside air at a position of the vehicle.

According to the first aspect, the outside air introduction processing for making the outside air introduction ratio of the air conditioning device greater than 0% is executed in the off state of the start switch. If the outside air introduction ratio of the air conditioning device becomes greater than 0 in the off state of the start switch, since the amount of outside air introduced into the vehicle interior increases compared to a case where the outside air introduction ratio is 0, an inside-outside air humidity difference (the difference between vehicle inside relative humidity and vehicle outside relative humidity or the difference between vehicle inside absolute humidity and vehicle outside absolute humidity) is apt to become small in the off state of the start switch. Accordingly, in a case where the first condition is satisfied, there is a high possibility that the absolute humidity (absolute humidity of outside air) based on the vehicle outside humidity information coincides with the vehicle inside absolute humidity when the start switch is turned on. For this reason, the absolute humidity based on the vehicle outside humidity information can be effectively used as the vehicle inside absolute humidity (initial value) when the start switch is turned on. Therefore, according to the first aspect, in a case where the first condition is satisfied, it is possible to increase a possibility of obtaining the vehicle inside absolute humidity with high calculation accuracy using the vehicle outside humidity information.

In the above-described aspect, the controller may be further configured to detect a parking state in which the length of an off period of the start switch exceeds a predetermined time. The controller may be configured to, in a case where a second condition that the parking state is detected is further satisfied, calculate the vehicle inside absolute humidity with the absolute humidity based on the vehicle outside humidity information as an initial value.

When the off period of the start switch is longer, the inside-outside air humidity difference is apt to become smaller. Therefore, in the above-described configuration, in a case where the second condition is further satisfied, it is possible to further increase a possibility of obtaining the vehicle inside absolute humidity with high calculation accuracy.

In the above-described aspect, the controller may be further configured to determine whether or not the difference between an inside air temperature and an outside air temperature or the difference between a saturated water vapor amount according to the inside air temperature and a saturated water vapor amount according to the outside air temperature is equal to or less than a predetermined value in the off state of the start switch or when the start switch is turned on. The controller may be configured to, in a case where a third condition that it is determined that the difference is equal to or less than the predetermined value is further satisfied, calculate the vehicle inside absolute humidity with the absolute humidity based on the vehicle outside humidity information as an initial value.

If outside air is introduced into the vehicle interior in the off state of the start switch, like the inside-outside air humidity difference, an inside-outside air temperature difference (the difference between the inside air temperature and the outside air temperature) is apt to become small. Therefore, in the above-described configuration, in a case where the third condition is further satisfied, it is possible to further increase a possibility of obtaining the vehicle inside absolute humidity with high calculation accuracy. The difference (that is, the difference in the saturated water vapor amount between inside air and outside air) between the saturated water vapor amount according to the inside air temperature and the saturated water vapor amount according to the outside air temperature has a high correlation with the inside-outside air temperature difference, and can be used like the inside-outside air temperature difference.

In the above-described aspect, the controller may be further configured to execute blower operation processing for operating a blower motor of the air conditioning device in a state in which the outside air introduction ratio is greater than 0% in the off state of the start switch. The controller may be configured to, in a case where a fourth condition that the blower operation processing is executed is further satisfied, calculate the vehicle inside absolute humidity with the absolute humidity based on the vehicle outside humidity information as an initial value.

If the blower motor is operated in a state in which the outside air introduction ratio of the air conditioning device is greater than 0%, the amount of outside air introduced into the vehicle interior increases compared to a case where the blower motor is not operated in the same state. When the amount of outside air introduced into the vehicle interior is larger, the inside-outside air humidity difference is apt to become smaller. Therefore, in the above-described configuration, in a case where the fourth condition is further satisfied, it is possible to further increase a possibility of obtaining the vehicle inside absolute humidity with high calculation accuracy.

In the above-described aspect, the controller may be further configured to determine whether or not the difference between an inside air temperature and an outside air temperature or the difference between a saturated water vapor amount according to the inside air temperature and a saturated water vapor amount according to the outside air temperature is equal to or less than a predetermined value in the off state of the start switch. The controller may be configured to, in a case where it is determined that the difference is not equal to or less than the predetermined value, start the blower operation processing.

According to the above-described configuration, in a case where it is determined, by the controller, that the difference is not equal to or less than the predetermined value, since the blower operation processing is started, it is possible to reduce the difference comparatively rapidly.

In the above-described first aspect, the humidity represented by the vehicle outside humidity information may be relative humidity, and the controller may be configured to calculate the initial value based on temperature information representing an outside air temperature or an inside air temperature when the start switch is turned on and the vehicle outside humidity information.

According to the above-described configuration, it is possible to increase a possibility of obtaining the vehicle inside absolute humidity with high calculation accuracy using the vehicle outside humidity information representing relative humidity of outside air. As described above, if outside air is introduced into the vehicle interior, like the inside-outside air humidity difference, the inside-outside air temperature difference is apt to become small. Therefore, in a case where there is a high possibility that the inside-outside air humidity difference is small, the inside air temperature and the outside air temperature can be used equivalently.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a diagram showing the basic configuration of an air conditioning control system according to an example;

FIG. 2 is a diagram showing an example of an air conditioning device;
FIG. 3 is a diagram showing an example of the air conditioning device;
FIG. 4 is a diagram showing an example of the hardware configuration of a controller;
FIG. 5A is a diagram showing an example of a vehicle outside humidity derivation map;
FIG. 5B is an explanatory view of the relationship of relative humidity, absolute humidity, and temperature;
FIG. 6 is an explanatory view of a ventilation loss reduction effect;
FIG. 7 is a schematic flowchart showing an example of processing which is executed by the controller;
FIG. 8A is a schematic flowchart showing another example of processing which is executed by the controller;
FIG. 8B is a schematic flowchart showing another example of processing which is executed by the controller; and
FIG. 9 is an explanatory view of processing of FIG. 8A and FIG, 8B.

## DETAILED DESCRIPTION OF EMBODIMENTS

Hereinafter, respective examples will be described in detail referring to the accompanying drawings.

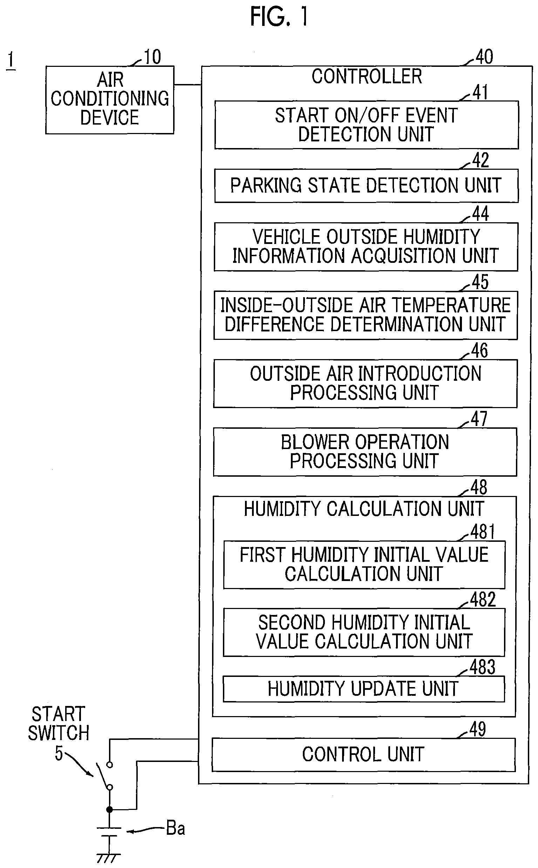

FIG. 1 is a diagram showing the basic configuration of an air conditioning control system 1 according to an example.

An air conditioning control system 1 is mounted in a vehicle. Hereinafter, the vehicle in which the air conditioning control system 1 is mounted is referred to as a "host vehicle". The air conditioning control system 1 includes an air conditioning device 10 and a controller 40.

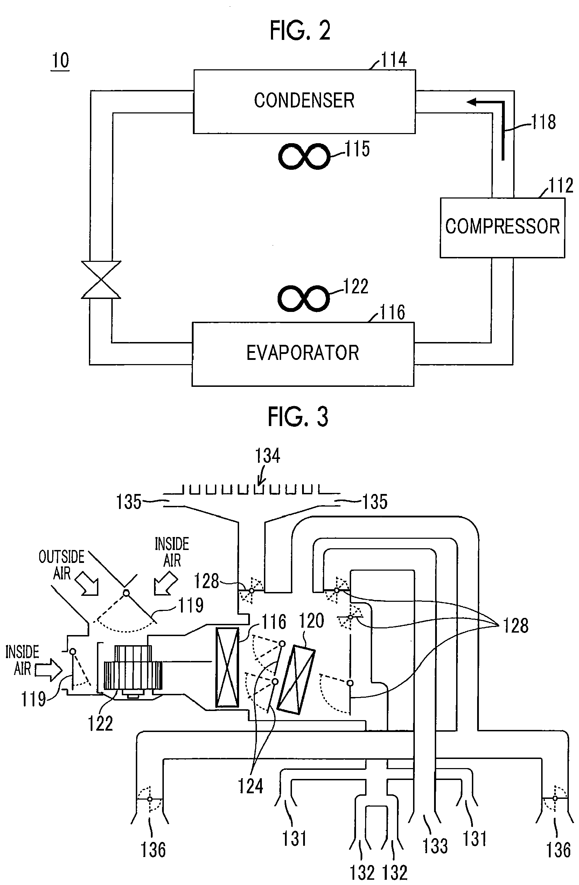

The air conditioning device 10 has an ability to vary the amount of outside air (for example, the amount of outside air per unit time) introduced into the vehicle interior of the host vehicle. The amount of outside air introduced into the vehicle interior of the host vehicle can be changed by changing the openings of outside/inside air doors (for example, outside/inside air doors 119 shown in FIG. 3). The amount of outside air introduced into the vehicle interior of the host vehicle can be changed by changing the rotation speed of the blower motor (for example, a blower motor 122 shown in FIG. 3) when an outside air introduction ratio is greater than 0%.

FIGS. 2 and 3 are diagrams showing an example of the air conditioning device 10. In the examples shown in FIGS. 2 and 3, the air conditioning device 10 includes a compressor 112 which compresses a refrigerant. The refrigerant compressed by the compressor 112 circulates through a refrigerant passage 118 including a condenser 114 or an evaporator 116. The condenser 114 functions to cool a gasified refrigerant to change the gasified refrigerant to a liquid refrigerant to be supplied to the evaporator 116. In front of the condenser 114, a suction type electric fan 115 which cools the condenser 114 is disposed. The evaporator 116 is provided in the vehicle interior. In front of the evaporator 116, as shown in FIGS. 2 and 3, a blower motor (blower fan) 122 whose rotation speed is regulatable is disposed. The blower motor 122 communicates with the outside of the vehicle or the vehicle interior through the outside/inside air doors 119. The blower motor 122 has a function of pumping air (that is, outside air, inside air, or mixed air thereof) outside the vehicle or in the vehicle interior into the vehicle interior through the evaporator 116. A flow rate (that is, blower air volume) of air pumped into the vehicle interior is regulated by controlling the rotation speed of the blower motor 122. If the blower motor 122 rotates, air (that is, outside air, inside air, or mixed air thereof) flowing through the outside/inside air doors 119 passes through the evaporator 116. The evaporator 116 gasifies the refrigerant compressed by the compressor 112 to cool air passing through the evaporator 116. On a backstream side of the evaporator 116, a heater core 120 is disposed. In the heater core 120, air mix doors 124 whose openings are regulatable (for example, are driven by servo motors) are set. The heater core 120 has a function (reheat function) of mixing warm air with air cooled by the evaporator 116 in cooperation with the air mix doors 124. A temperature of air pumped into the vehicle interior is regulated by controlling the openings (that is, a mixture ratio of cold air and warm air) of the air mix doors 124. On a backstream side of the heater core 120, respective ducts which guide mixed air to respective outlets (foot outlets 131, rear heater ducts 132, center register 133, center defrosters 134, side defrosters 135, side registers 136) are provided at predetermined locations in the vehicle interior. On the backstream side of the heater core 120, mode doors 128 which selectively guide mixed air to a predetermined outlet are set.

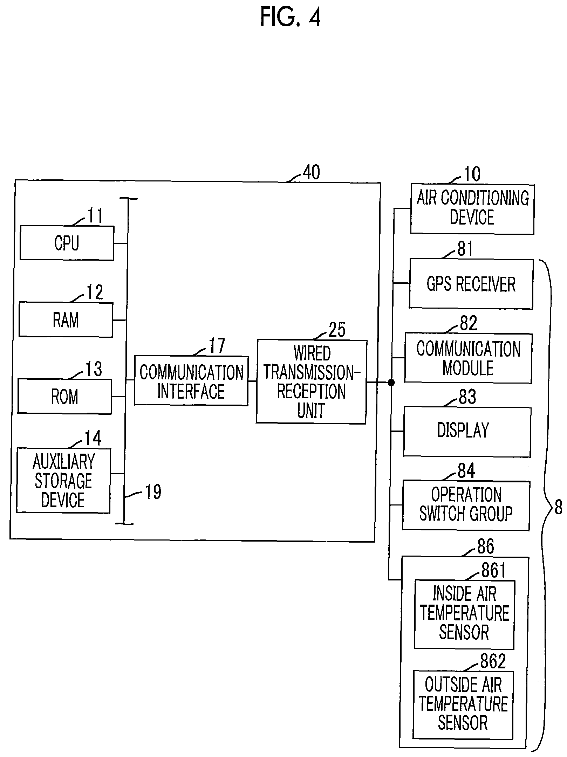

The controller 40 is formed of a computer. For example, the controller 40 is an air conditioner electronic control unit (ECU). FIG. 4 is a diagram showing an example of the hardware configuration of the controller 40. In FIG. 4, in association with the hardware configuration of the controller 40, examples of elements including an in-vehicle electronic apparatus group 8 and air conditioning device 10 are schematically shown.

The controller 40 includes a central processing unit (CPU) 11, a random access memory (RAM) 12, a read only memory (ROM) 13, an auxiliary storage device 14, and a communication interface 17 connected to one another through a bus 19, and a wired transmission-reception unit 25 connected to the communication interface 17.

The wired transmission-reception unit 25 includes a transmission-reception unit which can perform communication using a vehicle network, such as a controller area network (CAN) or a local interconnect network (LIN). The controller 40 may include a wireless transmission-reception unit (not shown) connected to the communication interface 17, in addition to the wired transmission-reception unit 25. In this case, the wireless transmission-reception unit may include a near field communication (NFC) unit, a Bluetooth (Registered Trademark) communication unit, a Wireless-Fidelity (Wi-Fi) transmission-reception unit, an infrared transmission-reception unit, or the like.

The in-vehicle electronic apparatus group 8 includes a global positioning system (GPS) receiver 81, a communication module 82, a display 83, an operation switch group 84, and an air conditioner related sensor 86.

The GPS receiver 81 measures a position of the host vehicle based on electric waves from GPS satellites.

The communication module 82 is, for example, a transmission-reception unit which can perform wireless communication using a wireless communication network in a mobile phone. The communication module 82 is fixed into the host vehicle. However, in a modification example, the communication module 82 may be implemented by a portable terminal (for example, a smartphone, a tablet, or the like) which can be carried into the host vehicle. In this case, the controller 40 can perform communication with the outside through the wireless transmission-reception unit (for example, a Bluetooth communication unit) and the communication module 82.

The display 83 is, for example, a touch panel type liquid crystal display. The display 83 is disposed at a position where a user (occupant) of the host vehicle can visually observe. The display 83 is a display which is fixed into the host vehicle, but may be a display of a portable terminal which can be carried into the host vehicle. In this case, communication between the portable terminal and the controller 40 can be implemented through the wireless transmission-reception unit (for example, a Bluetooth communication unit).

The operation switch group 84 is provided in a control panel (not shown) on which the user performs an operation on the air conditioning device 10. The control panel is disposed in, for example, an instrument panel. The operation switch group 84 includes an A/C switch for turning on/off the operation of the compressor 112, a switch for switching an operation mode (auto mode or manual mode) of the air conditioning device 10, a switch for switching an inlet mode (inside air circulation mode or outside air introduction mode), a switch (blower dial) for regulating the blower air volume, a defroster switch for switching on/off of a foot/defroster mode or a defroster mode, a switch (temperature setting dial) for performing temperature setting, and the like. A part or the whole of the operation switch group 84 may be set in the portable terminal which can be carried into the host vehicle.

The air conditioner related sensor 86 includes an inside air temperature sensor 861 which detects an inside air temperature as a temperature in the vehicle interior, and an outside air temperature sensor 862 which detects an outside air temperature as a temperature outside the vehicle. In addition, the air conditioner related sensor 86 may include a solar radiation sensor which detects the amount of solar radiation, a rain sensor which detects raindrops, a temperature sensor which detects a temperature of cold air immediately after passing through the evaporator 116, and the like.

As shown in FIG. 1, the controller 40 includes a start on/off event detection unit 41, a parking state detection unit 42, a vehicle outside humidity information acquisition unit 44, an inside-outside air temperature difference determination unit 45 (an example of a difference determination unit), an outside air introduction processing unit 46, a blower operation processing unit 47, a humidity calculation unit 48, and a control unit 49. The start on/off event detection unit 41, the vehicle outside humidity information acquisition unit 44, the parking state detection unit 42, the inside-outside air temperature difference determination unit 45, the outside air introduction processing unit 46, the blower operation processing unit 47, the humidity calculation unit 48, and the control unit 49 can be respectively implemented by the CPU 11 shown in FIG. 4 executing one or more programs stored in the ROM 13.

The start on/off event detection unit 41 detects an on/off event of a start switch 5 of the host vehicle. The start switch 5 is a switch which is turned on by the user when starting the host vehicle in a travelable state, and is turned off by the user when releasing the travelable state. The start switch 5 is generally an ignition switch, but in a case of an electric vehicle, the start switch 5 is a power switch which is provided in an electric power supply path from a high voltage battery (not shown) to an electric motor for traveling (not shown). For example, in a case of the ignition switch, the user presses an engine start switch (not shown) in the vehicle interior while operating a brake pedal (not shown), thereby transiting the ignition switch to an on state. If the start switch 5 is brought into the on state, a power supply voltage (hereinafter, referred to as a "microcomputer power supply voltage") for the operation of the controller 40 is generated based on a power supply Ba by a power supply generation circuit (not shown) in the controller 40. The on/off event of the start switch 5 of the host vehicle can be detected based on the state of the microcomputer power supply voltage which changes according to the on/off state of the start switch 5. In the off state of the start switch 5, the controller 40 can operate based on a power supply voltage (+B) from the power supply Ba without passing through the start switch 5. Hereinafter, a period which starts when the start switch 5 is turned off and ends when the start switch 5 is next turned on is referred to as "an off period of the start switch 5".

The parking state detection unit 42 detects a parking state in which the length of the off period of the start switch 5 exceeds a first predetermined time T1. The first predetermined time T1 is a time until the inside-outside air humidity difference becomes sufficiently small, and depends on an execution form of outside air introduction processing described below, the volume of the vehicle interior, or the like. The first predetermined time T1 is, for example, one hour. Hereinafter, the parking state in which the length of the off period of the start switch 5 exceeds the first predetermined time T1 is referred to as a "predetermined parking state".

In an example, based on a timer TM (not shown), which times out when an elapsed time after the start switch 5 is turned off becomes the first predetermined time T1, the parking state detection unit 42 detects the predetermined parking state in a case where the timer TM times out until the start switch 5 is turned on.

In another example, the parking state detection unit 42 determines whether or not an elapsed time after the start switch 5 is turned off previously exceeds the first predetermined time T1 when the start switch 5 is turned on, and in a case where the elapsed time exceeds the first predetermined time T1, detects the predetermined parking state.

The vehicle outside humidity information acquisition unit 44 acquires vehicle outside humidity information representing humidity of the outside (outside air) of the host vehicle in the position of the host vehicle. Hereinafter, humidity of outside air is referred to as "vehicle outside humidity". The term "vehicle outside humidity" is a concept representing both of relative humidity and absolute humidity of the outside of the host vehicle. Hereinafter, relative humidity of outside air is referred to as "vehicle outside relative humidity", and absolute humidity of outside air is referred to as "vehicle outside absolute humidity".

In an example, the vehicle outside humidity information acquisition unit 44 acquires vehicle outside humidity information representing the vehicle outside relative humidity at the position of the host vehicle. In an example, the vehicle outside humidity information acquired by the vehicle outside humidity information acquisition unit 44 is information indicating the vehicle outside relative humidity itself. The vehicle outside humidity information can be acquired from, for example, a server (not shown) which provides weather information. In this case, the vehicle outside humidity information acquisition unit 44 acquires the vehicle outside humidity information at the position of the host vehicle from the server through the communication module 82. The vehicle outside humidity information may be acquired in the form of being included in the weather information, or may be acquired alone. In a case where there is vehicle outside humidity information, which can be provided from the server, for each area, the vehicle outside humidity information at the position of the host vehicle is vehicle outside humidity information related to an area to which the position of the host vehicle belongs. The position of the host vehicle can be determined based on positioning information from the GPS receiver 81.

In another example, the vehicle outside humidity information acquisition unit 44 acquires vehicle outside humidity information representing the vehicle outside absolute humidity at the position of the host vehicle. The vehicle outside humidity information representing the vehicle outside absolute humidity can also be acquired from, for example, a server (not shown) which provides weather data. In such a server, the vehicle outside absolute humidity is calculated from the vehicle outside relative humidity and the outside air temperature. In this case, the vehicle outside humidity information acquisition unit 44 acquires the vehicle outside humidity information at the position of the host vehicle from the server through the communication module 82.

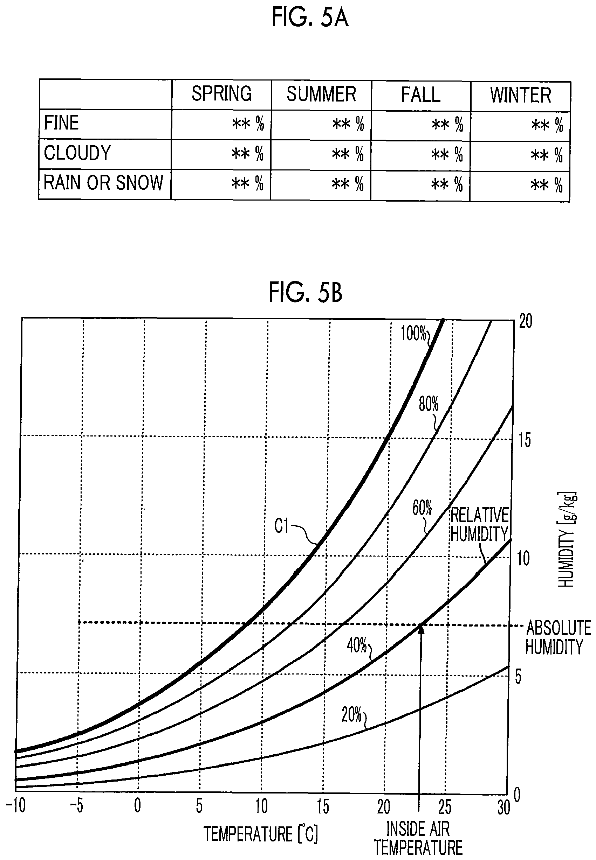

In a further example, the vehicle outside humidity information acquisition unit 44 first acquires weather information representing the type of weather, such as rain, fine, or snow, and a rainfall amount or a snowfall amount. In this case, the vehicle outside humidity information acquisition unit 44 predicts vehicle outside humidity at the position of the host vehicle based on the weather information, for example, using a vehicle outside humidity derivation map (see FIG. 5A), thereby acquiring vehicle outside humidity information. In the vehicle outside humidity derivation map shown in FIG. 5A, corresponding vehicle outside relative humidity is specified for each season and each weather. In FIG. 5A, "**" means that there is any corresponding information. The weather information can be acquired from, for example, a server (not shown) which provides weather data. Such a server is, for example, a server which derives and provides weather information with a high real-time property based on raw information received from many observers all over the country, observation data from observation devices provided all over the country, and prediction from movement of clouds by a radar. In a case where there is weather information, which can be provided from the server, for each area, the weather information at the position of the host vehicle is weather information related to an area to which the position of the host vehicle belongs. Alternatively, in a case where a rain sensor is mounted in the host vehicle as one element of the air conditioner related sensor 86, weather information can be acquired from the rain sensor. For example, detection information of raindrops by the rain sensor represents that the type of weather is "rain".

The vehicle outside humidity information acquisition unit 44 acquires vehicle outside humidity information representing vehicle outside humidity when the start switch 5 is turned on.

In an example, the vehicle outside humidity information acquisition unit 44 acquires vehicle outside humidity information when the start switch 5 is turned on. In another example, the vehicle outside humidity information acquisition unit 44 acquires vehicle outside humidity information (for example, vehicle outside humidity information at every given time) over the off period of the start switch 5. In this case, an average value or a maximum value of the vehicle outside humidity information acquired by the vehicle outside humidity information acquisition unit 44 can be used as information representing vehicle outside humidity when the start switch 5 is turned on. In a further example, the vehicle outside humidity information acquisition unit 44 acquires the vehicle outside humidity information at an arbitrary time during the last off period of the start switch 5 (however, before the start switch 5 is turned on). In a case where change in vehicle outside humidity during the off period of the start switch 5 is small, although accuracy is slightly reduced, the vehicle outside humidity information before the start switch 5 is turned on can also be used as information representing the vehicle outside humidity when the start switch 5 is turned on.

The inside-outside air temperature difference determination unit 45 determines whether or not the difference (hereinafter, referred to as an "inside-outside air temperature difference") between the outside air temperature and the inside air temperature is equal to or less than a predetermined value Dth in the off state of the start switch 5 or when the start switch 5 is turned on. The predetermined value Dth is an inside-outside air temperature difference at which it can be estimated that the inside-outside air humidity difference becomes sufficiently small, and is, for example, 5°C. In a case of further increasing accuracy, the predetermined value Dth is, for example, 1°C. Outside air temperature information can be acquired from the outside air temperature sensor 862. Inside air temperature information can be acquired from the inside air temperature sensor 861. The same acquisition methods apply to outside air temperature information and the like described in the following description.

In an example, when a second predetermined time T2 has elapsed from the off event of the start switch 5, the inside-outside air temperature difference determination unit 45 determines whether or not the inside-outside air temperature difference is equal to or less than the predetermined value Dth based on the outside air temperature information and the inside air temperature information at this time. The second predetermined time T2 is equal to, for example, the first predetermined time T1. In this case, the inside-outside air temperature difference determination unit 45 can start using the timer TM common to the parking state detection unit 42. However, the second predetermined time T2 may be longer or shorter than the first predetermined time T1.

In another example, when the start switch 5 is turned on, the inside-outside air temperature difference determination unit 45 determines whether or not the inside-outside air temperature difference is equal to or less than the predetermined value Dth based on the outside air temperature information and the inside air temperature information at this time.

The outside air introduction processing unit 46 executes outside air introduction processing for making the outside air introduction ratio of the air conditioning device 10 greater than 0% in the off state of the start switch 5. The outside air introduction ratio can be changed by regulating the openings of the outside/inside air doors 119. For example, when the start switch 5 is turned off, the outside air introduction processing unit 46 sets the outside air introduction ratio of the air conditioning device 10 to a predetermined ratio $\alpha$ (> 0). Alternatively, when a predetermined short time (for example, a time within one minute) has elapsed after the start switch 5 is turned off, the outside air introduction processing unit 46 sets the outside air introduction ratio of the air conditioning device 10 to the predetermined ratio $\alpha$. In the off state of the start switch 5, when the outside air introduction ratio is higher, the inside-outside air humidity difference is apt to become smaller. Accordingly, the predetermined ratio $\alpha$ is preferably equal to or greater than 50%, and is, for example, 100%.

In an example, if the outside air introduction ratio of the air conditioning device 10 is set to the predetermined ratio $\alpha$, the outside air introduction processing unit 46 maintains the outside air introduction ratio of the air conditioning device 10 to be equal to or greater than the predetermined ratio $\alpha$ in the subsequent off state of the start switch 5. This is because, when the time for which the outside air introduction ratio is great is longer, the inside-outside air humidity difference is apt to become smaller.

In another example, the outside air introduction processing unit 46 sets the outside air introduction ratio of the air conditioning device 10 to the predetermined ratio $\alpha$, and then, in a case where a fourth predetermined time T4 has elapsed in the off state of the start switch 5, returns the outside air introduction ratio to 0% (that is, ends a state in which the outside air introduction ratio is greater than 0%). This is because, even in a case where the outside air introduction ratio returns to 0%, there is a high possibility that a state in which the inside-outside air humidity difference is sufficiently small is maintained until the start switch 5 is turned on. The fourth predetermined time T4 is a time required for making the inside-outside air humidity difference sufficiently small in a state in which the outside air introduction ratio is the predetermined ratio $\alpha$, and is, for example, one hour.

The blower operation processing unit 47 executes blower operation processing in the off state of the start switch 5. The blower operation processing is processing for operating the blower motor 122 in a state in which the outside air introduction ratio of the air conditioning device 10 is greater than 0%. In this example, as an example, the blower operation processing unit 47 starts the blower operation processing in a case where it is determined by the inside-outside air temperature difference determination unit 45 that the inside-outside air temperature difference is not equal to or less than the predetermined value Dth in the off state of the start switch 5. If the blower operation processing starts, the blower operation processing unit 47 continues the blower operation processing until a predetermined end condition (hereinafter, simply referred to as a "blower operation end condition") is satisfied in the off state of the start switch 5.

The blower operation end condition is set such that the blower operation processing ends at the timing at which it can be estimated that the inside-outside air humidity difference becomes sufficiently small. In an example, the blower operation end condition is formed of a first end condition that the inside-outside air temperature difference based on current outside air temperature information and inside air temperature information is equal to or less than the predetermined value Dth. In a case of using the first end condition, the blower operation processing unit 47 determines whether or not the first end condition is established in cooperation with the inside-outside air temperature difference determination unit 45. In another example, the blower operation end condition is formed of a second end condition that an operation time of the blower motor 122 exceeds a third predetermined time T3. The third predetermined time T3 depends on the predetermined value Dth or the like, and is, for example, ten minutes. In a further example, the blower operation end condition includes both of the first end condition and the second end condition in an OR manner, and may be satisfied in a case where either of the first end condition or the second end condition is satisfied.

In a case where a predetermined condition (hereinafter, referred to as a "vehicle outside humidity use condition") is satisfied, the humidity calculation unit 48 calculates vehicle inside absolute humidity (absolute humidity inside the host vehicle) of the host vehicle in the on state of the start switch 5 with absolute humidity based on the vehicle outside humidity information acquired by the vehicle outside humidity information acquisition unit 44 as an initial value. The expression "absolute humidity based on the vehicle outside humidity information acquired by the vehicle outside humidity information acquisition unit 44" is a conversion value (for example, a first initial value described below) to absolute humidity based on the vehicle outside relative humidity in a case where the vehicle outside humidity information represents the vehicle outside relative humidity, and is the vehicle outside absolute humidity in a case where the vehicle outside humidity information represents the vehicle outside absolute humidity. The initial value is a value representing the vehicle inside absolute humidity when the start switch 5 is turned on.

The vehicle outside humidity use condition is a condition which is specified so as to be satisfied under a situation in which the inside-outside air humidity difference is sufficiently small, and includes a first condition among the following four conditions: (First Condition) the outside air introduction processing is executed by the outside air introduction processing unit 46; (Second Condition) the predetermined parking state is detected by the parking state detection unit 42; (Third Condition) the inside-outside air temperature difference determination unit 45 determines that the inside-outside air temperature difference is equal to or less than the predetermined value Dth; and (Fourth Condition) the blower operation processing is executed by the blower operation processing unit 47.

In a first example, the vehicle outside humidity use condition is satisfied simply in a case where the first condition is established. Alternatively, the vehicle outside humidity use condition is satisfied in a case where the first condition and the second condition are established simultaneously. Alternatively, the vehicle outside humidity use condition is satisfied in a case where the first condition and the third condition are established simultaneously. Alternatively, the vehicle outside humidity use condition is satisfied in a case where the first condition and the fourth condition are established simultaneously. Alternatively, the vehicle outside humidity use condition is satisfied in a case where the first condition to the third condition are established simultaneously. Alternatively, the vehicle outside humidity use condition is satisfied in a case where the first condition, the second condition, and the fourth condition are established simultaneously.

In a second example, the vehicle outside humidity use condition is satisfied in a case where either of a first predetermined condition or a second predetermined condition is satisfied.

In the second example, in an example, the first predetermined condition is satisfied in a case where the first condition and the third condition are established simultaneously. The second predetermined condition is satisfied in a case where the first condition and the fourth condition are established simultaneously. As described above, since the blower operation processing is executed in a state in which the outside air introduction ratio is greater than 0%, when the fourth condition is satisfied, the first condition is necessarily satisfied.

In the second example, in another example, the first predetermined condition is satisfied in a case where the first condition to the third condition are established simultaneously. The second predetermined condition is satisfied in a case where the first condition, the second condition, and the fourth condition are established simultaneously.

The fourth condition may be substituted with the following 4A-th condition: (4A-th Condition) the blower operation processing is executed by the blower operation processing unit 47 and the blower operation processing ends when the blower operation end condition is satisfied. In a case where the blower operation end condition is formed of the above-described first end condition, if the 4A-th condition is satisfied, the above-described third condition is necessarily satisfied. In a configuration in which the blower operation end condition is satisfied in a case where either of the first end condition or the second end condition is satisfied, the 4A-th condition may be substituted with, for example, the following 4B-th condition: (4B-th Condition) the blower operation processing is executed by the blower operation processing unit 47, and the blower operation processing ends when the first end condition is satisfied. In this case, if the 4B-th condition is satisfied, the above-described third condition is necessarily satisfied. Both of the 4A-th condition and the 4B-th condition require the fourth condition. That is, when the 4A-th condition is satisfied, the fourth condition is necessarily satisfied, and when the 4B-th condition is satisfied, the fourth condition is necessarily satisfied. In a case where the 4A-th condition or the 4B-th condition is used instead of the fourth condition, a possibility that the vehicle outside humidity use condition is satisfied only under a situation in which the inside-outside air humidity difference is sufficiently small further increases.

In this example, as an example, the humidity calculation unit 48 includes a first humidity initial value calculation unit 481, a second humidity initial value calculation unit 482, and a humidity update unit 483.

In this example, in a case where the above-described vehicle outside humidity use condition is satisfied, the humidity update unit 483 of the humidity calculation unit 48 calculates the vehicle inside absolute humidity in the on state of the start switch 5 with vehicle inside absolute humidity (a first initial value described below) calculated by the first humidity initial value calculation unit 481 based on the vehicle outside humidity information acquired by the vehicle outside humidity information acquisition unit 44 as an initial value. In a case where the vehicle outside humidity use condition is not satisfied, the humidity update unit 483 of the humidity calculation unit 48 calculates the vehicle inside absolute humidity in the on state of the start switch 5 with vehicle inside absolute humidity (a second initial value described below) calculated by the second humidity initial value calculation unit 482 as an initial value.

However, in a modification example, the humidity calculation unit 48 does not include the first humidity initial value calculation unit 481. In this case, the vehicle outside humidity information acquisition unit 44 acquires the vehicle outside humidity information representing the vehicle outside absolute humidity. In a case where the vehicle outside humidity use condition is satisfied, the humidity calculation unit 48 sets the vehicle outside absolute humidity represented by the vehicle outside humidity information acquired by the vehicle outside humidity information acquisition unit 44 as the initial value of the vehicle inside absolute humidity. Thereafter, the humidity calculation unit 48 calculates (updates) the vehicle inside absolute humidity based on the initial value in real time. Accordingly, in a case of such a modification example, as in a case of this example described below, in a case where the vehicle outside humidity use condition is satisfied, the humidity calculation unit 48 calculates the vehicle inside absolute humidity in the on state of the start switch 5 with the absolute humidity based on the vehicle outside humidity information acquired by the vehicle outside humidity information acquisition unit 44 as an initial value.

Hereinafter, unless specifically described, it is assumed that the vehicle outside humidity information acquired by the vehicle outside humidity information acquisition unit 44 represents the vehicle outside relative humidity. The vehicle outside humidity information included in easily available weather information generally represents the vehicle outside relative humidity.

The first humidity initial value calculation unit 481 calculates the vehicle inside absolute humidity based on temperature information representing the outside air temperature or the inside air temperature when the start switch 5 is turned on and the vehicle outside humidity information acquired by the vehicle outside humidity information acquisition unit 44. In a case where the vehicle outside humidity use condition is satisfied, the vehicle inside absolute humidity calculated by the first humidity initial value calculation unit 481 is used as the initial value of the vehicle inside absolute humidity. Hereinafter, the vehicle inside absolute humidity calculated by the first humidity initial value calculation unit 481 is referred to as "the first initial value of the vehicle inside absolute humidity".

As the temperature information representing the outside air temperature when the start switch 5 is turned on, the outside air temperature information obtained from the outside air temperature sensor 862 when the start switch 5 is turned on can be used. However, in another example, the outside air temperature information from the outside air temperature sensor 862 obtained at an arbitrary time (however, before the start switch 5 is turned on) during the last off period of the start switch 5 may be used. In a case where change in the outside air temperature is small, although accuracy is slightly reduced, such outside air temperature information can also be used as information representing the outside air temperature when the start switch 5 is turned on. Similarly, as the temperature information representing the inside air temperature when the start switch 5 is turned on, the inside air temperature information obtained from the inside air temperature sensor 861 when the start switch 5 is turned on can be used. However, similarly, in another example, the inside air temperature information from the inside air temperature sensor 861 obtained at an arbitrary time (however, before the start switch 5 is turned on) during the last off period of the start switch 5 may be used.

A calculation method of the first initial value of the vehicle inside absolute humidity is as follows, for example.

In an example, the first humidity initial value calculation unit 481 calculates the vehicle outside absolute humidity from the outside air temperature and the vehicle outside relative humidity, and sets the calculated vehicle outside absolute humidity as the first initial value of the vehicle inside absolute humidity. This is because, as described above, in a case where the vehicle outside humidity use condition is satisfied, there is a high possibility that the inside-outside air humidity difference is small. A calculation method of the vehicle outside absolute humidity based on the outside air temperature and the vehicle outside relative humidity is as follows, for example.

$$\text{(vehicle outside absolute humidity)} = \text{(saturated water vapor amount with respect to outside air temperature)} \times \text{(vehicle outside relative humidity)} / 100$$

The saturated water vapor amount with respect to the outside air temperature can be found from a characteristic (the relationship between temperature and absolute humidity) C1 (see FIG. 5B) of relative humidity 100%.

In another example, the first humidity initial value calculation unit 481 calculates the vehicle outside absolute humidity from the vehicle outside relative humidity using the inside air temperature as the outside air temperature, and sets the calculated vehicle outside absolute humidity as the first initial value of the vehicle inside absolute humidity. This is because, as described above, in a case where the vehicle outside humidity use condition is satisfied, there is a high possibility that both of the inside-outside air humidity difference and the inside-outside air temperature difference are small.

The second humidity initial value calculation unit 482 calculates the vehicle inside absolute humidity based on the inside air temperature information representing the inside air temperature when the start switch 5 is turned on. In a case where the vehicle outside humidity use condition is not satisfied, the vehicle inside absolute humidity calculated by the second humidity initial value calculation unit 482 is used as the initial value of the vehicle inside absolute humidity. Hereinafter, the vehicle inside absolute humidity calculated by the second humidity initial value calculation unit 482 is referred to as "the second initial value of the vehicle inside absolute humidity".

In an example, the second humidity initial value calculation unit 482 sets the saturated water vapor amount corresponding to the inside air temperature as the second initial value of the vehicle inside absolute humidity. That is, the second humidity initial value calculation unit 482 sets the saturated water vapor amount corresponding to the inside air temperature as the second initial value of the vehicle inside absolute humidity on an assumption that the vehicle inside relative humidity is 100%. The saturated water vapor amount corresponding to the inside air temperature can be found from the characteristic (the relationship between temperature and absolute humidity) C1 (see FIG. 5B) of relative humidity 100%.

The humidity update unit 483 calculates (updates) the subsequent vehicle inside absolute humidity (that is, vehicle inside absolute humidity after the start switch 5 is turned on) using the first initial value of the vehicle inside absolute humidity calculated by the first humidity initial value calculation unit 481 or the second initial value of the vehicle inside absolute humidity calculated by the second humidity initial value calculation unit 482. The update method can be implemented by, for example, a method disclosed in JP 2015-54688 A. That is, the humidity update unit 483 separately calculates both of an increase amount of the vehicle inside absolute humidity and a decrease amount of the vehicle inside absolute humidity during traveling of the host vehicle in real time, and calculates (updates) the vehicle inside absolute humidity based on the increase amount and the decrease amount. The increase amount of the vehicle inside absolute humidity includes an increase amount due to a water vapor generation amount (evaporated moisture amount accompanied by breathing and sweating) from an occupant, for example. The decrease amount of the vehicle inside absolute humidity includes a decrease amount due to ventilation of inside-outside air, a decrease amount due to condensation in a low temperature region in the vehicle interior, and a decrease amount due to moisture absorption into an interior member in the vehicle interior.

The control unit 49 controls the inlet mode of the air conditioning device 10 after the start switch 5 is turned on. In a case where an operation mode of the air conditioning device 10 is a manual mode, the control unit 49 sets the inlet mode according to the state of the switch for switching the inlet mode (inside air circulation mode or outside air introduction mode). In a case where the operation mode of the air conditioning device 10 is an auto mode, the control unit 49 determines the inlet mode based on the vehicle inside absolute humidity calculated by the humidity update unit 483. For example, the control unit 49 calculates the vehicle inside relative humidity corresponding to the inside air temperature and the vehicle inside absolute humidity based on the inside air temperature and the vehicle inside absolute humidity from the characteristic shown in FIG. 5B. Then, in a case where the calculated vehicle inside relative humidity is equal to or lower than inside air conversion start humidity, the control unit 49 sets the outside air introduction ratio to 0% (inside air circulation mode). In a case where the calculated vehicle inside relative humidity exceeds the inside air conversion start humidity, the control unit 49 sets the outside air introduction ratio to 100% (outside air introduction mode). In this way, control of the inlet mode according to the vehicle inside relative humidity is implemented without using a humidity sensor. Hereinafter, transition from the outside air introduction mode to the inside air circulation mode after the start switch 5 is turned on is referred to as "inside air conversion".

According to the air conditioning control system 1, as described above, in a case where the vehicle outside humidity use condition is satisfied, the first humidity initial value calculation unit 481 calculates the first initial value of the vehicle inside absolute humidity using the vehicle outside humidity information acquired by the vehicle outside humidity information acquisition unit 44. In a case where the vehicle outside humidity use condition is satisfied, there is a high possibility that the inside-outside air humidity difference is sufficiently small. Accordingly, with the use of the vehicle outside humidity information, a possibility that the first initial value of the vehicle inside absolute humidity can be calculated with high accuracy increases. If the first initial value with high calculation accuracy is obtained, the calculation accuracy of the subsequent vehicle inside absolute humidity calculated by the humidity update unit 483 based on the first initial value of the vehicle inside absolute humidity increases. In this way, according to the air conditioning control system 1, in a case where the vehicle outside humidity use condition is satisfied, it is possible to increase a possibility that the vehicle inside absolute humidity with high calculation accuracy is obtained using the vehicle outside humidity information.

According to the air conditioning control system 1, as described above, in a case where the vehicle outside humidity use condition is not satisfied, the second humidity initial value calculation unit 482 calculates the second initial value of the vehicle inside absolute humidity without using the vehicle outside humidity information. In a case where the inside-outside air humidity difference is comparatively large, if the initial value of the vehicle inside absolute humidity is found using the vehicle outside humidity information, there is a concern that the accuracy of the initial value is deteriorated. In this respect, according to the air conditioning control system 1, in a case where there is a possibility that the inside-outside air humidity difference is comparatively large, the second initial value of the vehicle inside absolute humidity is calculated. With this, it is possible to reduce inconvenience (for example, inconvenience that fogging of a front windshield occurs due to acceleration of the inside air conversion more than necessary) which may be caused in a case where the initial value of the vehicle inside absolute humidity is found using the vehicle outside humidity information under a situation in which, actually, the relative humidity of outside air is significantly lower than that of inside air.

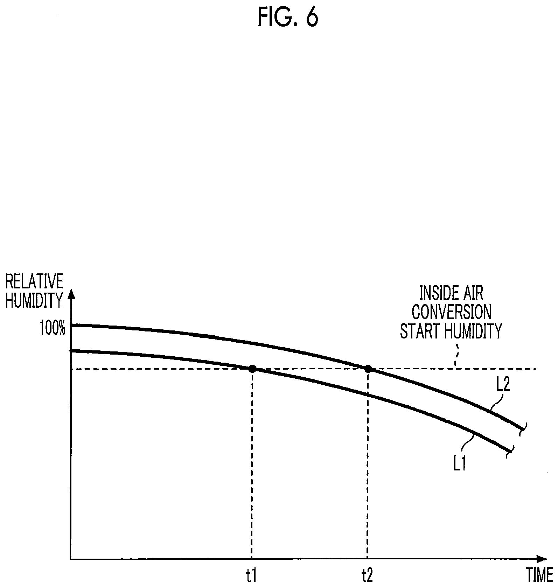

FIG. 6 is an explanatory view of effects of this example. In FIG. 6, transition (time-series) of the vehicle inside relative humidity (the calculation value by the humidity update unit 483) after the start switch 5 is turned on in a case of using the first initial value is indicated by a curve L1, and transition (time-series) of the vehicle inside relative humidity in a case of using the second initial value is indicated by a curve L2. In regards to the curve L1 and the curve L2, the condition of the inside air temperature is identical. When the inside air temperature is identical, the second initial value is greater than the first initial value. In FIG. 6, it is assumed that the vehicle outside relative humidity at the position of the host vehicle indicated by the vehicle outside humidity information is significantly lower than 100% (for example, 80%).

In a case where the vehicle inside relative humidity is calculated using the second initial value, the calculation value of the vehicle inside relative humidity becomes the transition of the curve L2, and at a time t2, the inside air conversion (transition from the outside air introduction mode to the inside air circulation mode) is implemented. In contrast, in a case where the vehicle inside relative humidity is calculated using the first initial value, the calculation value of the vehicle inside relative humidity becomes the transition of the curve L1 lower than the curve L2 by an amount in which the first initial value is smaller than the second initial value, and at a time t1 before the time t2, the inside air conversion is implemented. In this way, in a case where the vehicle inside relative humidity is calculated using the first initial value, the inside air conversion of the air conditioning device 10 is accelerated by the time difference between the time t2 and the time t1 compared to a case where the vehicle inside relative humidity is calculated using the second initial value.

In recent years, exhaust heat tends to decrease with improvement of the efficiency of the internal combustion engine, additional energy is used in order to obtain necessary heating ability, and there is a problem in that vehicle fuel efficiency is deteriorated. In a hybrid vehicle or an electric vehicle in which exhaust heat cannot be used, a heating load significantly affects fuel efficiency or a cruising distance. In order to reduce the heating load, it is useful to increase an inside air circulation rate or to reduce a ventilation loss. In a case where the host vehicle includes an internal combustion engine, it is useful to reduce a ventilation loss for early warming-up of the internal combustion engine.

In this respect, according to the air conditioning control system 1, as described above, in a case where the vehicle outside humidity use condition is satisfied, since the humidity update unit 483 calculates the vehicle inside absolute humidity using the first initial value, compared to a configuration in which the humidity update unit 483 calculates the vehicle inside absolute humidity using the second initial value in such a case, the inside air conversion is accelerated, and the ventilation loss can be reduced. According to the air conditioning control system 1, as described above, in a case where the vehicle outside humidity use condition is satisfied, since there is a high possibility that the first initial value of the vehicle inside absolute humidity has high accuracy, it is possible to reduce inconvenience (for example, inconvenience that fogging of the front windshield occurs due to acceleration of the inside air conversion more than necessary) in a case where the initial value has poor accuracy and is significantly lower than an actual value. In this way, according to the above-described air conditioning control system 1, it is possible to reduce a ventilation loss while reducing fogging of a window.

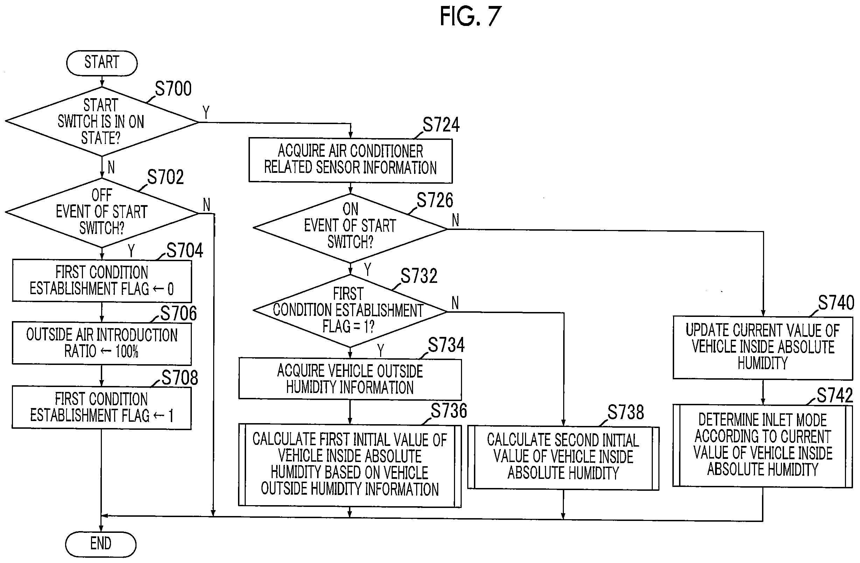

Next, several operation examples by the controller 40 will be described referring to FIGS. 7 to 9.

FIG. 7 is a schematic flowchart showing an example of processing which is executed by the controller 40. The processing shown in FIG. 7 is executed in each predetermined cycle.

In Step S700, the start on/off event detection unit 41 determines whether or not the start switch 5 is in the on state. In a case where the determination result is "YES", the process progresses to Step S724, and otherwise (that is, in a case where the start switch 5 is in the off state), the process progresses to Step S702.

In Step S702, the start on/off event detection unit 41 determines whether or not the off event of the start switch 5 is detected. In a case where the start switch 5 is changed from the on state to the off state in the present cycle, the start on/off event detection unit 41 detects the off event of the start switch 5. In a case where the determination result is "YES", the process progresses to Step S704, and otherwise (that is, in a case where the start switch 5 is in the off state after the off event), the processing in the present cycle ends.

In Step S704, the start on/off event detection unit 41 resets a first condition establishment flag to "0". The first condition establishment flag is a flag representing whether or not the outside air introduction processing is executed by the outside air introduction processing unit 46. When the first condition establishment flag is "1 ", this represents that the outside air introduction processing is executed.

In Step S706, the outside air introduction processing unit 46 sets the outside air introduction ratio of the air conditioning device 10 to the predetermined ratio α. In FIG. 7, it is assumed that the predetermined ratio α is 100%. When the outside air introduction ratio of the air conditioning device 10 at the present time is already 100%, the outside air introduction processing unit 46 maintains this state. When the outside air introduction ratio of the air conditioning device 10 at the present time is less than 100%, the outside air introduction processing unit 46 changes the outside air introduction ratio of the air conditioning device 10 to 100%.

In Step S708, the outside air introduction processing unit 46 sets the first condition establishment flag to "1".

In Step S724, the humidity calculation unit 48 acquires current values of respective sensor information (inside air temperature information and the like) from the air conditioner related sensor 86.

In Step S726, the start on/off event detection unit 41 determines whether or not the on event of the start switch 5 is detected. In a case where the start switch 5 is changed from the off state to the on state in the present cycle, the start on/off event detection unit 41 detects the on event of the start switch 5. In a case where the determination result is "YES", the process progresses to Step S732, and otherwise (that is, in a case where the start switch 5 is in the on state after the on event), the process progresses to Step S740.

In Step S732, the humidity calculation unit 48 determines whether or not the first condition establishment flag is "1". In a case where the determination result is "YES", the process progresses to Step S734, and otherwise (that is, in a case where the first condition establishment flag is "0"), the process progresses to Step S738.

In Step S734, the vehicle outside humidity information acquisition unit 44 acquires the vehicle outside humidity information. In FIG. 7, the vehicle outside humidity information acquisition unit 44 acquires the vehicle outside humidity information at the present time.

In Step S736, the first humidity initial value calculation unit 481 calculates the first initial value of the vehicle inside absolute humidity based on the vehicle outside relative humidity represented by the vehicle outside humidity information acquired by the vehicle outside humidity information acquisition unit 44 in Step S734 and the inside air temperature information obtained in Step S724. The calculation method of the first initial value of the vehicle inside absolute humidity is as described above.

In Step S738, the second humidity initial value calculation unit 482 calculates the second initial value of the vehicle inside absolute humidity based on the inside air temperature information obtained in Step S724. The calculation method of the second initial value of the vehicle inside absolute humidity is as described above.

In Step S740, the humidity update unit 483 calculates (updates) a current value of the vehicle inside absolute humidity. The update method is as described above. For example, when the initial value (first initial value or the second initial value) calculated in Step S736 or Step S738 is referred to as $Hr(t0)$, and the increase amount and the decrease amount of the vehicle inside absolute humidity from the present on event of the start switch 5 until the present time are respectively referred to as $\Delta Hr1(t)$ and $\Delta Hr2(t)$, the current value $Hr(t)$ of the vehicle inside absolute humidity is calculated as follows. $Hr(t) = Hr(t0) + \Delta Hr1(t) - \Delta Hr2(t)$. In Step S742, the control unit 49 calculates a current value of the vehicle inside relative humidity based on the current value of the vehicle inside absolute humidity calculated by the humidity update unit 483 in Step S740, and determines the inlet mode based on the calculated current value of the vehicle inside relative humidity. The determination method of the inlet mode is as described above.

According to the processing shown in FIG. 7, if the start on/off event detection unit 41 detects the off event of the start switch 5, the outside air introduction processing unit 46 sets the outside air introduction ratio of the air conditioning device 10 to 100%. With this, it is possible to promote outside air introduction into the vehicle interior in the off state of the start switch 5 compared to a case where the outside air introduction ratio of the air conditioning device 10 is set to, for example, 0%. Accordingly, compared to a case where the outside air introduction ratio of the air conditioning device 10 is set to, for example, 0% in the off state of the start switch 5, a possibility that the inside-outside air humidity difference becomes sufficiently small in the off state of the start switch 5 increases, and as a result, a possibility that the first initial value with high accuracy is calculated increases. If the first initial value with high accuracy is calculated, as described above, it is possible to increase the calculation accuracy of the subsequent vehicle inside absolute humidity which is calculated by the humidity update unit 483.

In FIG. 7, although the vehicle outside humidity use condition is formed of the first condition, in a modification example, the vehicle outside humidity use condition further includes the second condition. In this modification example, though not shown, prior to the determination in Step S732, the parking state detection unit 42 determines whether or not the length of the period from the previous off event of the start switch 5 until the present on event of the start switch 5 exceeds the first predetermined time T1. In a case where the determination result is "YES" (that is, in a case where the predetermined parking state is detected), the process progresses to Step S732, and otherwise, the process progresses to Step S738. According to such a modification example, the second condition is added, whereby a possibility that the first initial value with high accuracy is calculated further increases.

In a case where the operation example shown in FIG. 7 is employed, in the controller 40 of the air conditioning control system 1, the parking state detection unit 42, the inside-outside air temperature difference determination unit 45, and the blower operation processing unit 47 are not required, and a controller which does not include the parking state detection unit 42, the inside-outside air temperature difference determination unit 45, and the blower operation processing unit 47 may be used.

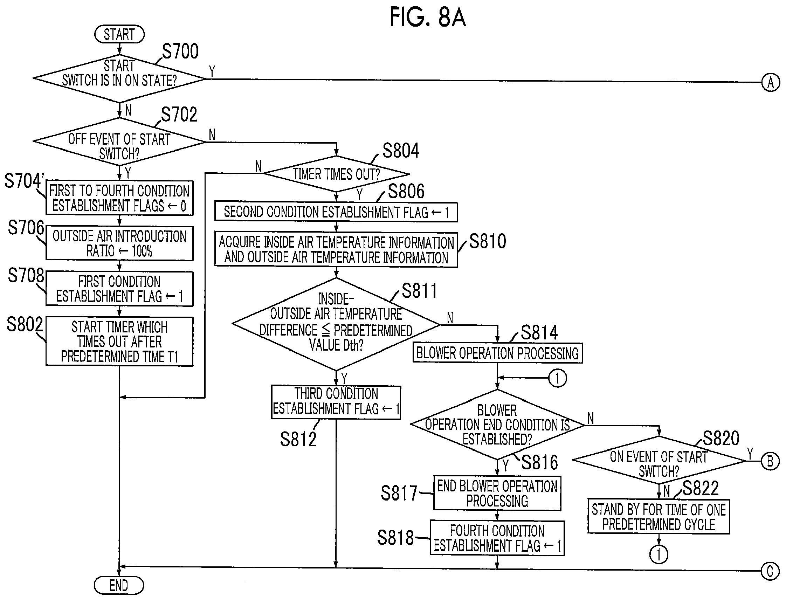

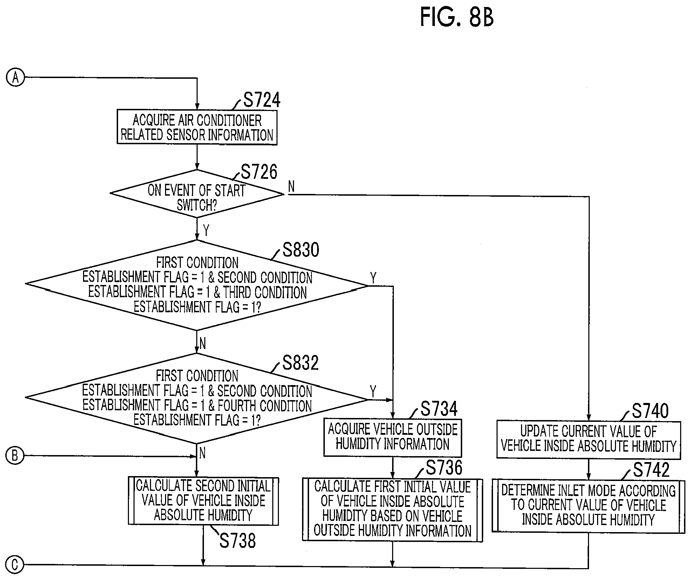

FIG. 8A and FIG. 8B are schematic flowcharts showing another example (a substitutive example of FIG. 7) of processing which is executed by the controller 40. The processing shown in FIG. 8A and FIG. 8B is executed, for example, in each predetermined cycle. The processing shown in FIG. 8A and FIG. 8B is different from the processing shown in FIG. 7 in that Step S704 is substituted with Step S704', Step S802 is added after Step S708, in a case where the determination result in Step S702 is "NO", Step S804 to Step S822 are additionally executed, and Step S830 and Step S832 are executed instead of Step S732. Hereinafter, different portions will be described. In FIG. 8A and FIG. 8B, as described below, the vehicle outside humidity use condition is satisfied in a case where either of the first predetermined condition or the second predetermined condition is satisfied.

In Step S704', the start on/off event detection unit 41 resets all of a first condition establishment flag, a second condition establishment flag, a third condition establishment flag, and a fourth condition establishment flag to "0". The first condition establishment flag is as described above. The second condition establishment flag is a flag representing whether or not the predetermined parking state is detected by the parking state detection unit 42. When the second condition establishment flag is "1 ", this represents that the predetermined parking state is detected by the parking state detection unit 42. The third condition establishment flag is a flag representing whether or not it is determined by the inside-outside air temperature difference determination unit 45 that the inside-outside air temperature difference is equal to or less than the predetermined value Dth. When the third condition establishment flag is "1 ", this represents that it is determined by the inside-outside air temperature difference determination unit 45 that the inside-outside air temperature difference is equal to or less than the predetermined value Dth. The fourth condition establishment flag is a flag representing whether or not the blower operation processing is executed by the blower operation processing unit 47 and the blower operation processing ends when the blower operation end condition is satisfied (that is, a flag representing whether or not the above-described 4A-th condition is satisfied). When the fourth condition establishment flag is "1 ", this represents that "the blower operation processing is executed by the blower operation processing unit 47 and the blower operation processing ends when the blower operation end condition is satisfied".

In Step S802, the start on/off event detection unit 41 starts the timer TM which times out after the first predetermined time T1. The timer TM stops at the time of time-out or when the start switch 5 is turned on.

In Step S804, the start on/off event detection unit 41 determines whether or not the timer TM times out. In a case where the determination result is "YES", the process progresses to Step S806, and otherwise, the processing in the present cycle ends.

In Step S806, the parking state detection unit 42 sets the second condition establishment flag to "1".

In Step S810, the inside-outside air temperature difference determination unit 45 acquires the inside air temperature information at the present time from the inside air temperature sensor 861 and acquires the outside air temperature information at the present time from the outside air temperature sensor 862.

In Step S811, the inside-outside air temperature difference determination unit 45 determines whether or not the inside-outside air temperature difference is equal to or less than the predetermined value Dth based on the inside air temperature information and the outside air temperature information obtained in Step S810. In a case where the determination result is "YES", the process progresses to Step S812, and otherwise, the process progresses to Step S814.

In Step 5812, the inside-outside air temperature difference determination unit 45 sets the third condition establishment flag to "1".

In Step S814, the blower operation processing unit 47 operates the blower motor 122 to start the blower operation processing. In FIG. 8A and FIG. 8B, the blower operation processing unit 47 sets the rotation speed of the blower motor 122 to a maximum value and starts the blower operation processing.

In Step S816, the blower operation processing unit 47 determines whether or not the blower operation end condition is established. In FIG. 8A and FIG. 8B, the blower operation end condition is formed of the above-described second end condition ("the operation time of the blower motor 122 exceeds the third predetermined time T3"). In a case where the determination result is "YES", the process progresses to Step S817, and otherwise, the process progresses to Step S820.

In Step S817, the blower operation processing unit 47 ends the blower operation processing.

In Step S818, the blower operation processing unit 47 sets the fourth condition establishment flag to "1".

In Step S820, the blower operation processing unit 47 determines whether or not the on event of the start switch 5 is detected by the start on/off event detection unit 41. In a case where the determination result is "YES", the process progresses to Step S738, and otherwise, the process progresses to Step S822. In Step S738 which progresses in a case where the determination result in Step S820 is "YES", the second humidity initial value calculation unit 482 acquires the current value of the inside air temperature from the inside air temperature sensor 861 of the air conditioner related sensor 86, and then, calculates the second initial value of the vehicle inside absolute humidity. A case where the determination result in Step S820 is "YES" refers to a case where the blower operation processing has not been continued due to the on event of the start switch 5 until the blower operation end condition is established. In a case where the blower operation processing has not been continued until the blower operation end condition is established, there is a possibility that the inside-outside air humidity difference does not become sufficiently small. For this reason, in FIG. 8A and FIG. 8B , in a case where the determination result in Step S820 is "YES", the process progresses to Step S738.

In Step S822, the blower operation processing unit 47 stands by for a time of one predetermined cycle. That is, the blower operation processing unit 47 performs the determination in Step S816 in the next processing cycle again.

In Step S830, the humidity calculation unit 48 determines whether or not the first predetermined condition is satisfied. That is, the humidity calculation unit 48 determines whether or not all of the first condition establishment flag, the second condition establishment flag, and the third condition establishment flag are "1". In a case where the determination result is "YES", the process progresses to Step S734, and otherwise (that is, in a case where at least one of the first condition establishment flag, the second condition establishment flag, or the third condition establishment flag is "0"), the process progresses to Step S832.

In Step S832, the humidity calculation unit 48 determines whether or not the second predetermined condition is satisfied. That is, the humidity calculation unit 48 determines whether or not all of the first condition establishment flag, the second condition establishment flag, and the fourth condition establishment flag are "1". In a case where the determination result is "YES", the process progresses to Step S734, and otherwise (that is, in a case where at least one of the first condition establishment flag, the second condition establishment flag, or the fourth condition establishment flag is "0"), the process progresses to Step S738.

According to the processing shown in FIG. 8A and FIG. 8B, like the processing shown in FIG. 7, since the outside air introduction processing unit 46 sets the outside air introduction ratio of the air conditioning device 10 to 100%, it is possible to promote outside air introduction in the off state of the start switch 5 compared to a case where the outside air introduction ratio of the air conditioning device 10 is set to, for example, 50%. Accordingly, compared to a case where the outside air introduction ratio of the air conditioning device 10 is set to, for example, 50%, it is possible to shorten the first predetermined time T1 which is a threshold for detecting the predetermined parking state, and a possibility that, even in a case where the off period of the start switch 5 is comparatively short, first initial value with high accuracy is calculated increases. If the first initial value with high accuracy is calculated, as described above, it is possible to increase the calculation accuracy of the subsequent vehicle inside absolute humidity which is calculated by the humidity update unit 483.

On the other hand, even in a case where the outside air introduction ratio is set to the predetermined ratio $\alpha$ (for example, 100%) and the state (predetermined parking state) in which the off period of the start switch 5 exceeds the first predetermined time T1 is detected, the inside-outside air humidity difference may not become sufficiently small due to the predetermined ratio $\alpha$, the setting form of the first predetermined time T1, or other factors. For example, in a case where the inside-outside air humidity difference when the start switch 5 is turned off is excessively large, even when the off period of the start switch 5 exceeds the first predetermined time T1 in a state in which the outside air introduction ratio is set to the predetermined ratio $\alpha$, the inside-outside air humidity difference may not become sufficiently small.

In this respect, according to the processing shown in FIG. 8A and FIG. 8B, in a case where the first predetermined condition or the second predetermined condition is satisfied as the vehicle outside humidity use condition, it is determined that the inside-outside air humidity difference is sufficiently small, and the first initial value is used. In FIG. 8A and FIG. 8B, the first predetermined condition is a condition in which the condition that it is determined by the inside-outside air temperature difference determination unit 45 that the inside-outside air temperature difference is equal to or less than the predetermined value Dth (third condition) is added to the first condition and the second condition in an AND manner. The inside-outside air temperature difference can be used as an index value regarding whether or not outside air is sufficiently introduced into the vehicle interior. This is because the larger outside air introduced into the vehicle interior, the smaller the inside-outside air temperature difference. Therefore, according to the processing shown in FIG. 8A and FIG. 8B, it is possible to further increase a possibility that the first initial value is used when the inside-outside air humidity difference is comparatively small.

In FIG. 8A and FIG. 8B, as described above, the second predetermined condition is a condition in which the 4A-th condition is added to the first condition and the second condition in an AND manner. The blower operation processing can promote introduction of outside air into the vehicle interior at the same outside air introduction ratio (> 0) compared to natural ventilation. The blower operation processing can reduce the inside-outside air humidity difference rapidly compared to natural ventilation. Therefore, according to the processing shown in FIG. 8A and FIG. 8B, it is possible to further increase a possibility that the first initial value is used when the inside-outside air humidity difference is comparatively small. Since the blower operation processing is not executed in a case where it is determined by the inside-outside air temperature difference determination unit 45 that the inside-outside air temperature difference is equal to or less than the predetermined value Dth, it is possible to reduce an opportunity of execution of the blower operation processing in the off state of the start switch 5, and to achieve power saving.

In the processing shown in FIG. 8A and FIG. 8B, in a case where the determination result in Step S811 is "NO", the process progresses to Step S814 and the blower operation processing is executed, but the invention is not limited thereto. For example, in a first modification example, in FIG. 8A and FIG. 8B, Step S814 to Step S822, and Step S832 may be omitted. In this case, in a case where the determination result in Step S811 is "NO", the processing in the present cycle may end, and in a case where the determination result in Step S830 is "NO", the process may progress to Step S738. In the first modification example, the blower operation processing unit 47 can be eliminated.

In a further modification example (hereinafter, referred to as a "second modification example") to the first modification example, Step S810 is omitted, and Step S811 and Step S812 are executed when the start switch 5 is turned on. In a case of the second modification example, in FIG. 8A and FIG. 8B, the inside-outside air temperature difference determination unit 45 determines whether or not the inside-outside air temperature difference is equal to or less than the predetermined value Dth based on the outside air temperature information and the inside air temperature information obtained in Step S724 prior to the determination in Step S830 by the humidity calculation unit 48. Then, in a case where the inside-outside air temperature difference is equal to or less than the predetermined value Dth, the inside-outside air temperature difference determination unit 45 sets the third condition establishment flag to "1".

In a further modification example (hereinafter, referred to as a "third modification example") to the second modification example, Steps S802 to 806 are omitted. In the third modification example, in a case where the determination result in Step S702 is "NO", the processing in the present cycle ends. In a case of the third modification example, the parking state detection unit 42 determines whether or not the length of a period from the previous off event of the start switch 5 to the present on event exceeds the first predetermined time T1 prior to the determination in Step S830 by the humidity calculation unit 48. Then, in a case where the determination result is "YES", the parking state detection unit 42 determines that the predetermined parking state is detected, and sets the second condition establishment flag to "1".

In the processing shown in FIG. 8A and FIG. 8B, the parking state detection unit 42 is used, but the invention is not limited thereto. For example, in a fourth modification example, the timer TM is substituted with another timer TM2 which times out after a second predetermined time T2 from the start, and the second predetermined time T2 is shorter than the first predetermined time T1. In the fourth modification example, Step S806 is omitted, and the condition that the second condition establishment flag is "1" is excluded from the respective determination conditions in Step S830 and Step S832.

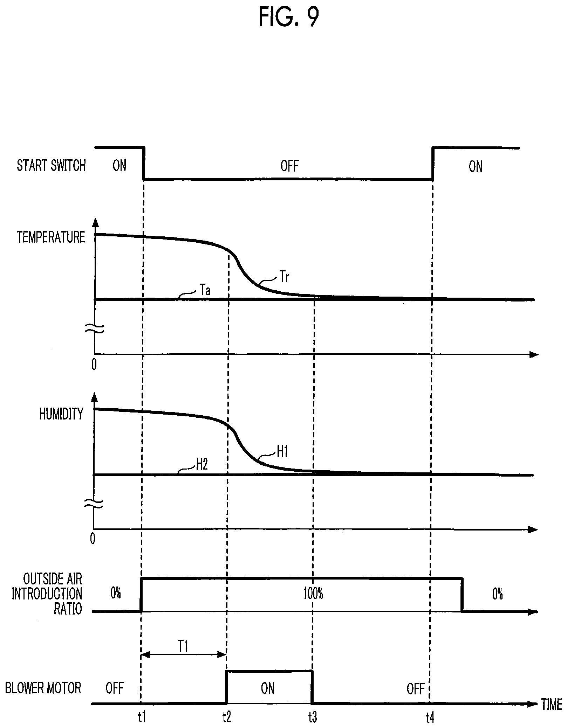

FIG. 9 is an explanatory view of the processing of FIG. 8A and FIG. 8B, and is a timing chart schematically showing various states over a period from any off event of the start switch 5 to the next on event. In FIG. 9, in order from the above, the on/off state of the start switch 5, an inside air temperature Tr and an outside air temperature Ta, vehicle inside relative humidity H1 and vehicle outside relative humidity H2, the state of the outside air introduction ratio, and the operation state of the blower motor 122 are shown in time series.

In FIG. 9, at a time t1, the off event of the start switch 5 is generated, and at this time, the inside air temperature Tr is significantly higher than the outside air temperature Ta and the vehicle inside relative humidity H1 is significantly higher than the vehicle outside relative humidity H2. However, at the time t1, since the outside air introduction ratio is set to 100%, the difference between the inside air temperature Tr and the outside air temperature Ta and the difference between the vehicle inside relative humidity H1 and the vehicle outside relative humidity H2 decrease over time. In FIG. 9, at a time t2 after the first predetermined time T1 from the time t1, the difference between the inside air temperature Tr and the outside air temperature Ta does not become equal to or less than the predetermined value Dth, and the blower operation processing is executed. With this, the difference between the inside air temperature Tr and the outside air temperature Ta and the difference between the vehicle inside relative humidity H1 and the vehicle outside relative humidity H2 become small comparatively rapidly. At a time t3 at which the blower operation processing ends, the difference between the inside air temperature Tr and the outside air temperature Ta and the difference between the vehicle inside relative humidity H1 and the vehicle outside relative humidity H2 become excessively small. Thereafter, the on event of the start switch 5 is generated at a time t4. At the time t4, the difference between the vehicle inside relative humidity H1 and the vehicle outside relative humidity H2 becomes substantially zero. Accordingly, in such a case, it is understood that the calculation accuracy of the vehicle inside absolute humidity (and the vehicle inside relative humidity based thereon) calculated by the humidity calculation unit 48 based on the vehicle outside humidity information increases.

Although the example has been described in detail, the invention is not limited to a specific example, and various modifications and alterations may be made without departing from the scope of the appended claims. In addition, all or a plurality of constituent elements of the example described above may be combined with one another.

For example, in the above-described example, instead of the inside-outside air temperature difference determination unit 45, a determination unit (hereinafter, referred to as a "saturated water vapor amount difference determination unit", another example of a difference determination unit) (not shown) which determines whether or not the difference between a saturated water vapor amount of outside air and a saturated water vapor amount of inside air is equal to or less than a predetermined value Dw may be provided. This is because the difference between the saturated water vapor amount of outside air and the saturated water vapor amount of inside air has a high correlation with the inside-outside air temperature difference. The saturated water vapor amount of outside air is a water vapor amount when the relative humidity is 100%, and changes depending on the outside air temperature (see FIG. 5B). The saturated water vapor amount of inside air is a water vapor amount when the relative humidity is 100%, and changes depending on the inside air temperature (see FIG. 5B). In this case, the above-described third condition is substituted with the following 3A-th condition: (3A-th condition) it is determined by the saturated water vapor amount difference determination unit that the saturated water vapor amount difference is equal to or less than the predetermined value Dw.

In the above-described example, the outside air introduction processing unit 46 may end a state in which the outside air introduction ratio is greater than 0% in a case where the above-described third condition is satisfied or in a case where the fourth condition is satisfied. This is because, even in this case, there is a possibility that a state in which the inside-outside air humidity difference is small is maintained until the start switch 5 is turned on thereafter.

In the above-described example, in a case where it is determined by the inside-outside air temperature difference determination unit 45 that the inside-outside air temperature difference is not equal to or less than the predetermined value Dth in the off state of the start switch 5, the blower operation processing unit 47 starts the blower operation processing, but the invention is not limited thereto. In a modification example, the blower operation processing unit 47 may start the blower operation processing under a situation in which it is not determined by the inside-outside air temperature difference determination unit 45 whether or not the inside-outside air temperature difference is equal to or less than the predetermined value Dth in the off state of the start switch 5. For example, the blower operation processing unit 47 may execute the blower operation processing prior to the determination by the inside-outside air temperature difference determination unit 45. In this case, the blower operation processing unit 47 may continue the blower operation processing in cooperation with the inside-outside air temperature difference determination unit 45 in the off state of the start switch 5 until the above-described first end condition is established. Alternatively, in a configuration in which the inside-outside air temperature difference determination unit 45 is not provided, blower operation processing unit 47 starts the blower operation processing, for example, a fifth predetermined time T5 has elapsed from the off event of the start switch 5. Thereafter, the blower operation processing unit 47 continues the blower operation processing in the off state of the start switch 5 until the second end condition is established. In this case, even in a configuration in which the inside-outside air temperature difference determination unit 45 is not provided, the blower operation processing unit 47 can function.

**Claims**

1.   An air conditioning control system which is provided in a vehicle, the air conditioning control system comprising:

an air conditioning device (10); and
a controller (40) configured to

acquire vehicle outside humidity information representing humidity when a start switch (5) of the vehicle is turned on, the vehicle outside humidity information being information representing humidity of outside air at a position of the vehicle,
execute outside air introduction processing for making an outside air introduction ratio of the air conditioning device greater than 0% in an off state of the start switch (5), and
when a first condition that the outside air introduction processing is executed is satisfied, calculate vehicle inside absolute humidity of the vehicle in an on state of the start switch (5) with absolute humidity based on the acquired vehicle outside humidity information as an initial value.

2.   The air conditioning control system according to claim 1,
wherein the controller (40) is further configured to detect a parking state in which the length of an off period of the start switch (5) exceeds a predetermined time, and when a second condition that the parking state is detected is further satisfied, calculate the vehicle inside absolute humidity with the absolute humidity based on the vehicle outside humidity information as an initial value.

3.   The air conditioning control system according to claim 1 or 2,
wherein the controller (40) is further configured to

determine whether or not the difference between an inside air temperature and an outside air temperature or the difference between a saturated water vapor amount according to the inside air temperature and a saturated water vapor amount according to the outside air temperature is equal to or less than a predetermined value in the off state of the start switch (5) or when the start switch (5) is turned on, and
when a third condition that it is determined that the difference is equal to or less than the predetermined value is further satisfied, calculate the vehicle inside absolute humidity with the absolute humidity based on the vehicle outside humidity information as an initial value.

4.   The air conditioning control system according to claim 1 or 2,
wherein the controller (40) is further configured to

execute blower operation processing for operating a blower motor of the air conditioning device (10) in a state in which the outside air introduction ratio is greater than 0% in the off state of the start switch (5), and when a fourth condition that the blower operation processing is executed is further satisfied, calculate the vehicle inside absolute humidity with the absolute humidity based on the vehicle outside humidity information as an initial value.

5. The air conditioning control system according to claim 4, wherein the controller (40) is further configured to determine whether or not the difference between an inside air temperature and an outside air temperature or the difference between a saturated water vapor amount according to the inside air temperature and a saturated water vapor amount according to the outside air temperature is equal to or less than a predetermined value in the off state of the start switch (5), and when it is determined that the difference is not equal to or less than the predetermined value, start the blower operation processing.

6. The air conditioning control system according to any one of claims 1 to 5, wherein the humidity represented by the vehicle outside humidity information is relative humidity, and the controller is configured to calculate the initial value based on temperature information representing an outside air temperature or an inside air temperature when the start switch (5) is turned on and the vehicle outside humidity information.

7. The air conditioning control system according to any one of claims 1 to 6, wherein the controller is configured to set the outside air introduction ratio to a predetermined ratio when a predetermined time elapses after the start switch is turned off.

8. The air conditioning control system according to any one of claims 1 to 7, wherein the controller is configured to perform outside air introduction processing for making the outside air introduction ratio equal to or greater than 50% in the off state of the start switch.

9. The air conditioning control system according to claim 4, wherein an operation end condition of the blower is that an inside-outside air temperature difference based on current outside air temperature information and inside air temperature information is equal to or less than a predetermined value.

## FIG. 1

1

10

**AIR CONDITIONING DEVICE**

40

**CONTROLLER**

41

**START ON/OFF EVENT DETECTION UNIT**

42

**PARKING STATE DETECTION UNIT**

44

**VEHICLE OUTSIDE HUMIDITY INFORMATION ACQUISITION UNIT**

45

**INSIDE-OUTSIDE AIR TEMPERATURE DIFFERENCE DETERMINATION UNIT**

46

**OUTSIDE AIR INTRODUCTION PROCESSING UNIT**

47

**BLOWER OPERATION PROCESSING UNIT**

48

**HUMIDITY CALCULATION UNIT**

481

**FIRST HUMIDITY INITIAL VALUE CALCULATION UNIT**

482

**SECOND HUMIDITY INITIAL VALUE CALCULATION UNIT**

483

**HUMIDITY UPDATE UNIT**

49

**CONTROL UNIT**

START SWITCH

5

Ba

# FIG. 2

# FIG. 3

# FIG. 4

## FIG. 5A

|  | SPRING | SUMMER | FALL | WINTER |
|---|---|---|---|---|
| FINE | ** % | ** % | ** % | ** % |
| CLOUDY | ** % | ** % | ** % | ** % |
| RAIN OR SNOW | ** % | ** % | ** % | ** % |

## FIG. 5B

FIG. 6

# FIG. 7

START

S700 — START SWITCH IS IN ON STATE? — Y → S724 ACQUIRE AIR CONDITIONER RELATED SENSOR INFORMATION

N ↓

S702 — OFF EVENT OF START SWITCH? — N →

Y ↓ S704 — FIRST CONDITION ESTABLISHMENT FLAG ← 0

S706 — OUTSIDE AIR INTRODUCTION RATIO ← 100%

S708 — FIRST CONDITION ESTABLISHMENT FLAG ← 1

S726 — ON EVENT OF START SWITCH? — N →

Y ↓ S732 — FIRST CONDITION ESTABLISHMENT FLAG = 1? — N →

Y ↓ S734 — ACQUIRE VEHICLE OUTSIDE HUMIDITY INFORMATION

S736 — CALCULATE FIRST INITIAL VALUE OF VEHICLE INSIDE ABSOLUTE HUMIDITY BASED ON VEHICLE OUTSIDE HUMIDITY INFORMATION

S738 — CALCULATE SECOND INITIAL VALUE OF VEHICLE INSIDE ABSOLUTE HUMIDITY

S740 — UPDATE CURRENT VALUE OF VEHICLE INSIDE ABSOLUTE HUMIDITY

S742 — DETERMINE INLET MODE ACCORDING TO CURRENT VALUE OF VEHICLE INSIDE ABSOLUTE HUMIDITY

END

EP 3 284 623 A1

# FIG. 8A

START

S700 — START SWITCH IS IN ON STATE? — Y → (A)

N

S702 — OFF EVENT OF START SWITCH? — N → S804

Y

S704' — FIRST TO FOURTH CONDITION ESTABLISHMENT FLAGS ← 0

S706 — OUTSIDE AIR INTRODUCTION RATIO ← 100%

S708 — FIRST CONDITION ESTABLISHMENT FLAG ← 1

S802 — START TIMER WHICH TIMES OUT AFTER PREDETERMINED TIME T1

S804 — TIMER TIMES OUT?

Y

S806 — SECOND CONDITION ESTABLISHMENT FLAG ← 1

S810 — ACQUIRE INSIDE AIR TEMPERATURE INFORMATION AND OUTSIDE AIR TEMPERATURE INFORMATION

S811 — INSIDE-OUTSIDE AIR TEMPERATURE DIFFERENCE ≤ PREDETERMINED VALUE Dth? — N → S814

Y

S812 — THIRD CONDITION ESTABLISHMENT FLAG ← 1

S814 — BLOWER OPERATION PROCESSING

① 

BLOWER OPERATION END CONDITION IS ESTABLISHED? — N → S820

Y

S816 — END BLOWER OPERATION PROCESSING (S817)

S818 — FOURTH CONDITION ESTABLISHMENT FLAG ← 1

S820 — ON EVENT OF START SWITCH? — Y → (B)

N

S822 — STAND BY FOR TIME OF ONE PREDETERMINED CYCLE

①

END

(C)

EP 3 284 623 A1

# FIG. 8B

Ⓐ ────────────┐

S724
ACQUIRE AIR CONDITIONER
RELATED SENSOR INFORMATION

S726
ON EVENT OF START
SWITCH? ──N──→

Y

S830
FIRST CONDITION
ESTABLISHMENT FLAG = 1 & SECOND CONDITION
ESTABLISHMENT FLAG = 1 & THIRD CONDITION
ESTABLISHMENT FLAG = 1? ──Y──→

N

S832
FIRST CONDITION
ESTABLISHMENT FLAG = 1 & SECOND CONDITION
ESTABLISHMENT FLAG = 1 & FOURTH CONDITION
ESTABLISHMENT FLAG = 1? ──Y──→

N

Ⓑ ────────────┘

S734
ACQUIRE VEHICLE OUTSIDE
HUMIDITY INFORMATION

S740
UPDATE CURRENT VALUE OF
VEHICLE INSIDE ABSOLUTE HUMIDITY

S738
CALCULATE SECOND INITIAL
VALUE OF VEHICLE INSIDE
ABSOLUTE HUMIDITY

S736
CALCULATE FIRST INITIAL VALUE
OF VEHICLE INSIDE ABSOLUTE
HUMIDITY BASED ON VEHICLE
OUTSIDE HUMIDITY INFORMATION

S742
DETERMINE INLET MODE ACCORDING
TO CURRENT VALUE OF VEHICLE
INSIDE ABSOLUTE HUMIDITY

Ⓒ

# FIG. 9

Europäisches
Patentamt

European
Patent Office

Office européen
des brevets

**EUROPEAN SEARCH REPORT**

Application Number

EP 17 18 2398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2011 068156 A (DENSO CORP) 7 April 2011 (2011-04-07) * abstract; figures * ----- | 1-9 | INV. B60H1/00 |
| A | JP 2008 137420 A (DENSO CORP) 19 June 2008 (2008-06-19) * abstract; figures * ----- | 1-9 | |
| A | JP 2011 057180 A (DENSO CORP) 24 March 2011 (2011-03-24) * abstract; figures * ----- | 1-9 | |

TECHNICAL FIELDS
SEARCHED (IPC)

B60H

The present search report has been drawn up for all claims

| Place of search | Date of completion of the search | Examiner |
|---|---|---|
| Munich | 22 December 2017 | Endrizzi, Silvio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

**EP 3 284 623 A1**

## ANNEX TO THE EUROPEAN SEARCH REPORT
## ON EUROPEAN PATENT APPLICATION NO.

EP 17 18 2398

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2017

| Patent document cited in search report | | Publication date | Patent family member(s) | Publication date |
|---|---|---|---|---|
| JP 2011068156 | A | 07-04-2011 | NONE | |
| JP 2008137420 | A | 19-06-2008 | NONE | |
| JP 2011057180 | A | 24-03-2011 | NONE | |

EPO FORM P0459

For more details about this annex : see Official Journal of the European Patent Office, No. 12/82

28

**REFERENCES CITED IN THE DESCRIPTION**

**Patent documents cited in the description**

- JP 2015054688 A